# FASCICULE DE BREVET EUROPEEN

(11) **EP 2 344 993 B1**
(45) Date de publication et mention de la délivrance du brevet: **01.01.2020**
(21) Numéro de dépôt: 09817297.6
(22) Date de dépôt: 30.09.2009
(51) Int. Cl.: G06Q 20/22, G06Q 20/28, G06Q 20/32

(54) **PROCEDE DE CHARGE EN ENERGIE ELECTRIQUE D'UN EQUIPEMENT MOBILE METTANT EN OEUVRE UN MODE DE PAIEMENT A DISTANCE**
VERFAHREN ZUM LADEN MIT ELEKTRISCHER ENERGIE EINER MOBILENTITÄT, DIE EINEN FERNBEZAHLUNGSMODUS IMPLEMENTIERT
METHOD OF CHARGING WITH ELECTRICAL ENERGY A MOBILE ENTITY IMPLEMENTING A REMOTE MODE OF PAYMENT

(30) Priorité: 30.09.2008 FR 0856604
(43) Date de publication de la demande: 20.07.2011
(73) Titulaire: Electricité de France, 75008 Paris (FR)
(72) Inventeur: BLEIJS, Cyriacus, F-75015 Paris (FR)
(74) Mandataire: Regimbeau
(86) Numéro de dépôt international: PCT/EP2009/062708
(87) Numéro de publication internationale: WO 2010/037790

(56) Documents cités:
- EP-A1- 1 995 109
- WO-A-2006/011019
- FR-A- 2 890 476
- GB-A- 2 438 979
- US-A1- 2005 017 068

## Description

### DOMAINE DE L'INVENTION

L'invention concerne un procédé d'alimentation en énergie électrique d'un équipement mobile consommateur d'énergie électrique, tel qu'un véhicule automobile.

### ETAT DE LA TECHNIQUE

Le développement des véhicules automobiles électriques nécessite l'installation d'infrastructures publiques ou privées spécifiques d'alimentation en énergie électrique. Ces infrastructures incluent notamment des bornes de chargement fixes réparties en divers lieux géographiques et auxquelles des véhicules peuvent être raccordés pour être alimentés en énergie électrique.

Le document FR 2 907 610 A1 décrit par exemple un système de chargement comprenant un poste d'alimentation électrique fixe (borne) relié à un réseau de distribution d'énergie, un module embarqué dans un véhicule électrique et un câble adapté pour relier de façon amovible le poste d'alimentation et le module embarqué. Le module embarqué comprend un émetteur apte à générer des signaux périodiques de test de continuité de la terre. Le poste d'alimentation comprend un récepteur apte à interrompre la charge en cas de détection de défaut sur la ligne de test ou lorsque la charge requise est atteinte.

L'énergie électrique consommée doit pouvoir être facturée aux utilisateurs. Différents modes de paiement ont déjà été envisagés.

Le document WO 2007/141543 A2 décrit une borne de chargement pour véhicules électriques, comprenant un processeur apte à recevoir des moyens de paiement, tels que par exemple une carte de crédit ou un paiement par téléphone mobile sous la forme d'un message émis par le téléphone mobile. La borne communique les informations nécessaires à un centre distant pour facturation.

Dans un tel système, la borne de chargement doit être munie d'une interface utilisateur permettant le paiement de l'énergie électrique et d'équipement de communication avec un centre distant de facturation.

Le document WO2006/011019 décrit un système de prépaiement utilisé dans le cadre d'un système de mesure pour des services publics tels que l'eau, l'électricité ou le gaz.

Document EP1995109 décrit un procédé d'alimentation en énergie électrique d'un véhicule mobile.

### PRESENTATION DE L'INVENTION

Un but de l'invention est de proposer une alternative aux procédés d'alimentation en énergie électrique connus, permettant notamment de simplifier les équipements requis pour la facturation de l'énergie consommée.

Ce problème est résolu dans le cadre de la présente invention grâce à un procédé d'alimentation en énergie électrique d'un véhicule selon la revendication 1.

Par « unité d'énergie », on désigne toute unité permettant de mesurer une quantité d'énergie électrique. Il peut s'agir d'une quantité unitaire donnée d'énergie (par exemple un kilowattheure) ou encore d'un prix unitaire donné (par exemple un euro) qui peut être converti en énergie électrique.

Dans un tel procédé, le terminal utilisateur assure une fonction d'interface d'une part avec le module embarqué et d'autre part avec le centre d'achat distant. L'invention tire partie des fonctionnalités déjà présentes dans la plupart des terminaux utilisateurs (écran, clavier, moyens de traitement). L'utilisateur utilise le terminal pour approvisionner le module embarqué en unités d'énergie électrique.

Le procédé peut comprendre les caractéristiques qui font l'objet des revendications 2 à 8.

L'invention se rapporte également à une application selon la revendication 9.

L'invention se rapporte également à un module selon la revendication 10.

### PRESENTATION DES FIGURES

D'autres caractéristiques et avantages ressortiront encore de la description qui suit, laquelle est purement illustrative et non limitative, et doit être lue en regard des figures annexées parmi lesquelles :
- la figure 1 représente de manière schématique un système de charge en énergie électrique conforme à un mode de mise en œuvre de l'invention,
- la figure 2 représente de manière schématique différentes modalités de mise en œuvre du système,
- les figures 3 à 5 représentent de manière schématique trois modes possibles d'intégration du module embarqué dans le véhicule,
- les figures 6 à 8 représentent de manière schématique trois variantes de réalisation conformes au premier mode d'intégration de la figure 3,
- les figures 9 à 12 illustrent de manière schématique des étapes d'un procédé de charge en énergie électrique.

### DESCRIPTION DETAILLEE D'UN MODE DE REALISATION

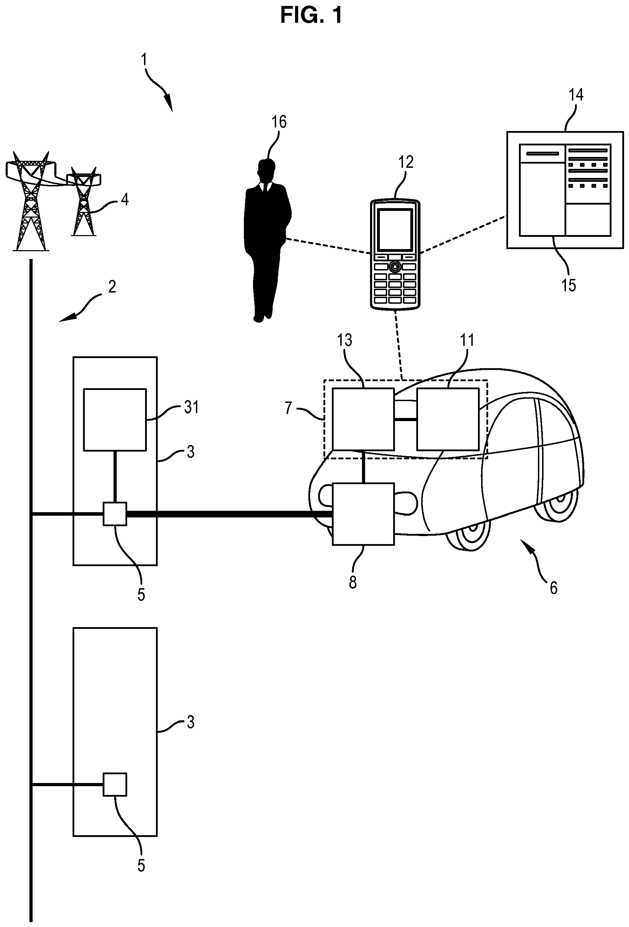

Sur la figure 1, le système 1 comprend une infrastructure 2 de charge. L'infrastructure 2 de charge comprend une pluralité de bornes 3 fixes de charge électrique reliées à un réseau 4 de distribution d'énergie électrique. Chaque borne 3 comprend un module de traitement 31 et une ou plusieurs prise(s) 5 d'alimentation permettant de raccorder un véhicule 6 automobile à la borne 3.

Le système 1 comprend en outre un module embarqué 7 dans le véhicule.

Le véhicule 6 comprend le module embarqué 6, un chargeur 8 de batterie et un câble 9 d'alimentation apte à être raccordé à la prise 5 d'alimentation de la borne 3 de chargement pour procéder au chargement de la batterie du véhicule.

Le module embarqué 7 comprend une interface 11 de communication apte à échanger des données avec un terminal utilisateur 12, et une mémoire 13 de stockage dans laquelle est enregistrée une réserve d'unités d'énergie. L'interface 11 de communication est de préférence une interface de communication courte distance, telle qu'une interface de communication sans fil, de type radioélectrique (Bluetooth, WiFi ou ZigBe par exemple) ou infrarouge (IrDA), ou une interface de communication filaire.

Le module embarqué 7 est apte à communiquer avec la borne 3 via le câble 9 d'alimentation, lorsque le câble 9 d'alimentation est raccordé à la prise 5.

Le système 1 comprend en outre un centre d'achat distant 14 incluant un serveur 15 de facturation.

L'utilisateur 16 du véhicule est muni d'un terminal utilisateur 12, tel qu'un terminal de téléphonie mobile ou un PDA. Le terminal utilisateur 12 comprend une interface de communication courte distance apte à échanger des données avec le module embarqué 7.

En outre, le terminal utilisateur 12 est programmé avec une application de charge. L'application de charge est par exemple une application en langage Java qui est présente dès l'origine dans le terminal utilisateur ou qui peut être téléchargée par l'utilisateur à partir d'un site web.

Le serveur 15 de facturation est apte à échanger des données avec le terminal utilisateur 12 via un réseau de communication longue distance classique, tel qu'un réseau de téléphonie mobile par exemple.

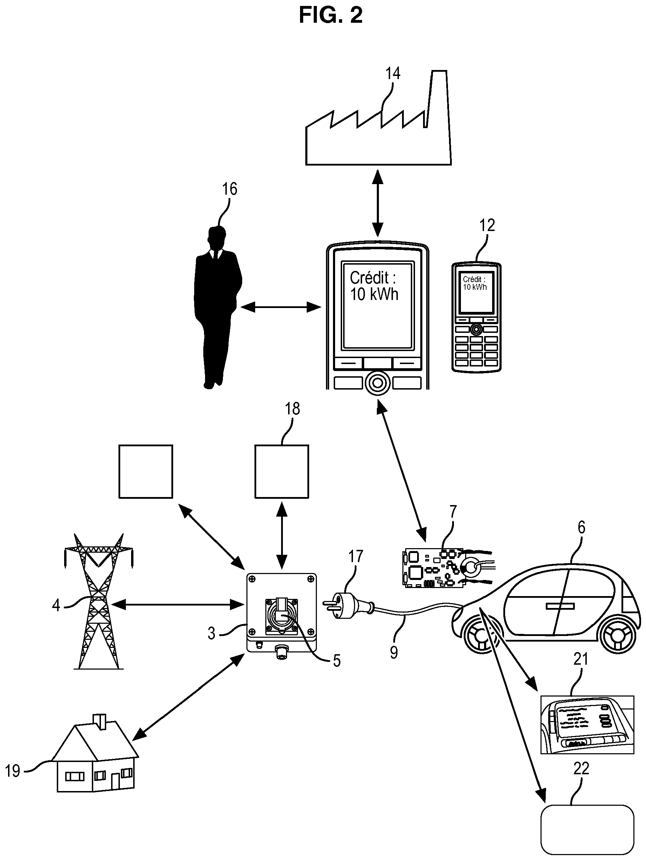

Sur la figure 2, le système représenté comprend une borne 3 de chargement, un véhicule 6 pouvant être raccordé à la borne 3, un terminal utilisateur 12 et un centre 14 de facturation distant.

La borne 3 de chargement peut comprendre un écran d'affichage 18. Elle peut être autonome ou communiquer avec un réseau de distribution électrique 4 ou des équipements de domotique 19.

Le terminal utilisateur 12 permet d'afficher des données de chargement, de commander l'achat d'unités ou de recevoir des messages d'alerte lorsque la réserve d'unités contenue dans le module 7 devient insuffisante. L'ordinateur de bord est apte à afficher les mêmes informations que le terminal utilisateur.

Le module embarqué est éventuellement apte à communiquer avec un ordinateur de bord 21 et à collecter des informations de diagnostique concernant le véhicule.

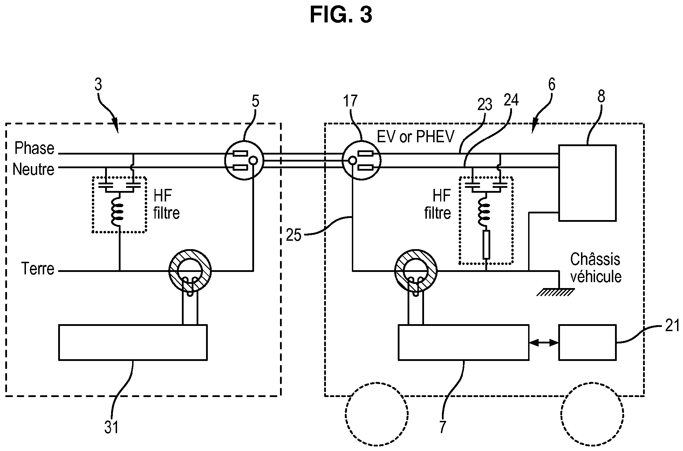

Les figures 3 à 5 représentent de manière schématique trois modes possibles d'intégration du module embarqué dans le véhicule.

Sur les figures 3 à 5, le véhicule comprend un chargeur 8 de véhicule et une prise de chargement 17. La prise 17 est reliée à un fil de phase 23 et un fil de neutre 24 destinés à véhiculer le signal de puissance pour la charge, ainsi qu'à un fil de terre 25 destiné à la protection de l'installation électrique. Les deux fils de puissance 23, 24 sont reliés au chargeur 8 du véhicule. Le fil de terre 25 est relié au châssis du véhicule.

La borne 3 de chargement comprend une ou plusieurs prise(s) 5 et un module de traitement 31.

Selon un premier mode d'intégration représenté sur la figure 3, le module embarqué 7 communique avec le module de traitement 31 par génération de courants porteurs en ligne (Power Line Carriers) sur le fil de terre 25.

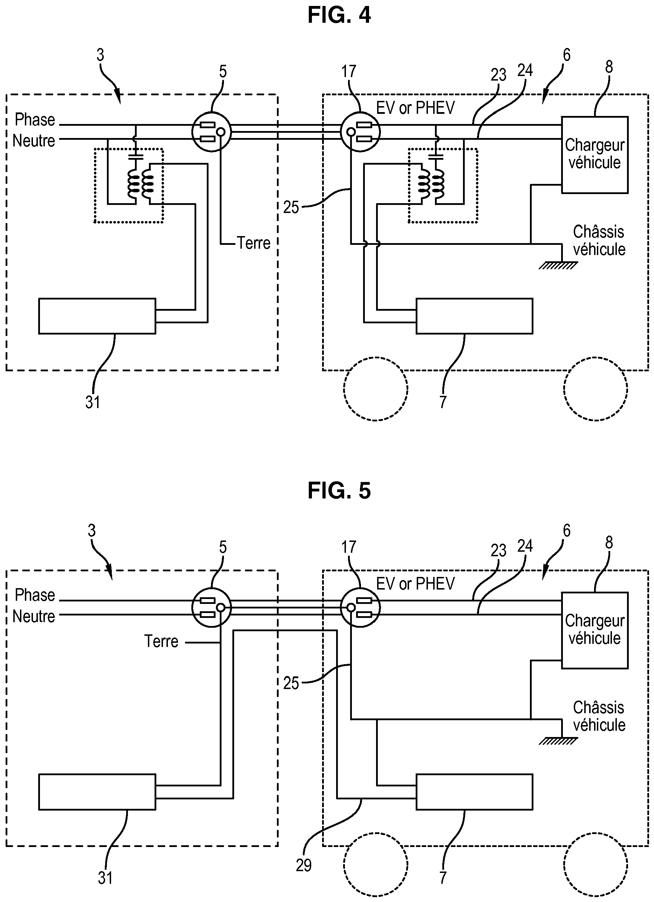

Selon un deuxième mode d'intégration représenté que la figure 4, le module embarqué 7 communique avec le module de traitement 31 par génération de courants porteurs en ligne sur les fils de puissance 23, 24.

Selon un troisième mode d'intégration représenté sur la figure 5, le module embarqué 7 communique avec le module de traitement 31 par génération de courant sur un fil supplémentaire dédié 29.

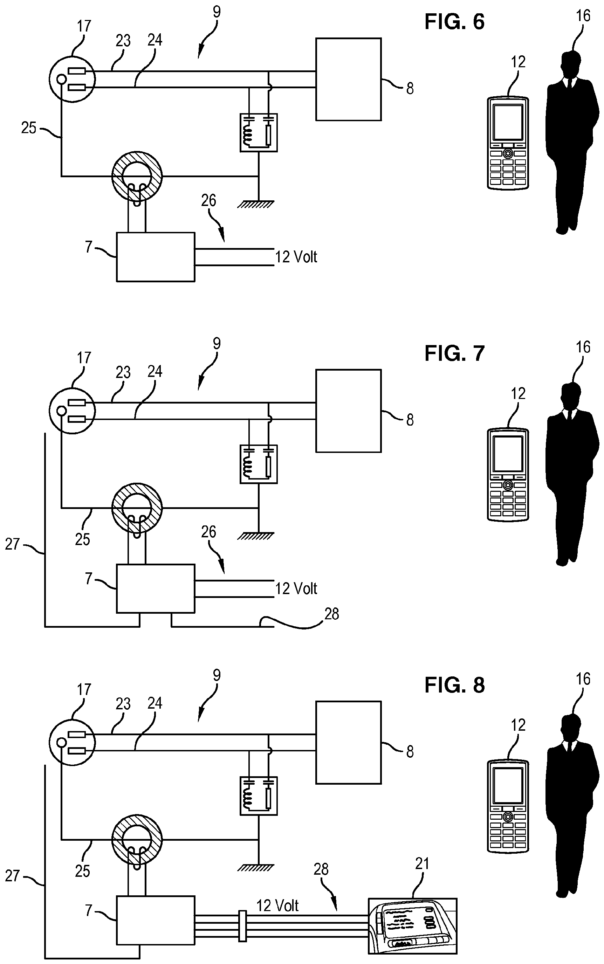

Les figures 6 à 8 représentent de manière schématique trois variantes de réalisation conformes au premier mode d'intégration de la figure 3.

Sur la figure 6, le module embarqué 7 est alimenté par le circuit électrique interne 26 en 12 Volts du véhicule.

L'utilisateur 16 utilise le terminal utilisateur 12 comme interface pour communiquer avec le module embarqué 7 et obtenir des informations concernant le chargement du véhicule. Il peut notamment vérifier en temps réel la quantité d'unités d'énergie restante dans la réserve.

Sur la figure 7, le module embarqué 7 est en outre relié à une ligne de détection de charge 27.

Le module embarqué 7 est également relié à une ligne 28 de transmission d'autorisation de charge. Cette ligne 28 permet au module 7 de recevoir des informations d'autorisation de charge lorsque les conditions de sécurité du véhicule sont réunies pour autoriser la charge.

Sur la figure 7, le module embarqué est relié à un ordinateur de bord 21 par l'intermédiaire d'un bus CAN 28 (Controller Area Network) du véhicule. Le module embarqué 7 est ainsi apte à communiquer avec l'ordinateur de bord 21, notamment pour échanger des données de charge ou de diagnostique.

Dans cette troisième variante, l'utilisateur utilise le terminal utilisateur 12 ou l'ordinateur de bord 21 comme interface pour communiquer avec le module embarqué 7. L'utilisateur 16 peut visualiser des informations de charge ou de diagnostique, au choix sur un écran de l'ordinateur de bord ou sur un écran du terminal utilisateur.

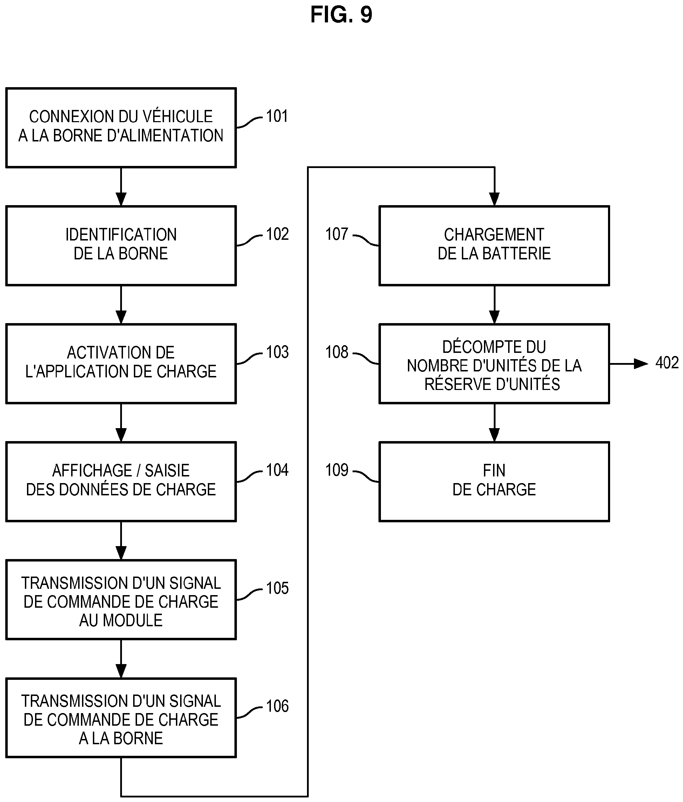

Les figures 9 à 12 illustrent de manière schématique des étapes d'un procédé de charge conforme à un mode de réalisation de l'invention.

La figure 9 illustre plus particulièrement des étapes de charge de la batterie du véhicule.

Selon une première étape 101, l'utilisateur du véhicule connecte le véhicule à la borne d'alimentation pour chargement.

Selon une deuxième étape 102, la borne transmet au module embarqué un signal d'identification de borne, contenant des données identifiant la borne. Les données identifiant la borne incluent par exemple un numéro de borne.

Selon une troisième étape 103, le module transmet au terminal utilisateur un signal d'activation de l'application de charge.

Selon une quatrième étape 104, en réponse à ce signal, le terminal exécute l'application de charge. L'application de charge permet à l'utilisateur d'interroger le module embarqué pour connaître le niveau de charge de la batterie du véhicule. Elle permet également à l'utilisateur de saisir des données concernant notamment la quantité d'énergie électrique demandée ou un temps de charge.

Selon une cinquième étape 105, l'application de charge transmet un signal de commande de charge au module embarqué pour déclencher le chargement du véhicule.

Selon une sixième étape 106, le module embarqué transmet à la borne un signal de commande de charge contenant des données identifiant le véhicule (par exemple un numéro de châssis ou une référence propre), le niveau de tension de la batterie, un identifiant de carte de crédit, la quantité d'unités présentes dans la mémoire de stockage du module embarqué, une quantité d'énergie demandée et un temps de charge.

Selon une septième étape 107, la borne déclenche le chargement de la batterie.

Au fur et à mesure du chargement, le module embarqué débite la réserve d'unités d'énergie du nombre d'unités correspondant à la quantité d'énergie absorbée par la batterie (huitième étape 108).

En parallèle, le module de traitement de la borne réalise un décompte du nombre d'unités correspondant à la quantité d'énergie fournie par la borne.

Selon une neuvième étape 109, l'opération de recharge de la batterie prend fin lorsque l'utilisateur déconnecte le véhicule de la borne, lorsque la batterie est chargée, lorsque la réserve d'unités est épuisée ou lorsque la durée de charge excède une durée de charge limite admise par la borne.

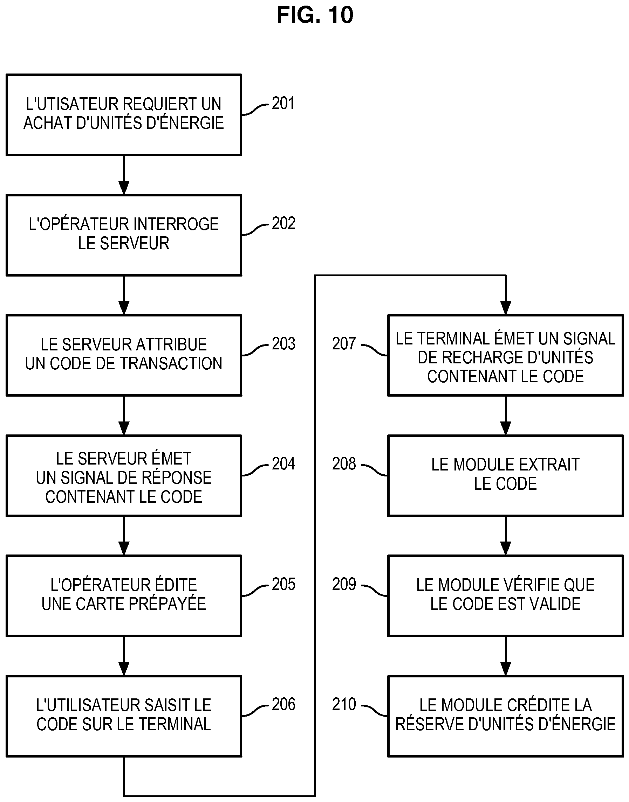

Les figures 10 à 12 illustrent des étapes permettant un réapprovisionnement de la réserve d'unités d'énergie contenues dans le module embarqué.

L'opération de réapprovisionnement peut être réalisée selon trois modes possibles.

Dans chacun des modes proposés, l'utilisateur a la possibilité à tout moment d'acheter des unités pour approvisionner la réserve d'unités contenue dans le module embarqué. Dans le troisième mode de réalisation, le réapprovisionnement est également réalisé de manière automatique, en fonction du niveau de la réserve d'unités d'énergie dans le module embarqué, l'utilisateur se contentant de valider la transaction.

### Premier mode

Le premier mode est illustré sur la figure 10.

L'utilisateur se rend dans un point de vente et demande à un opérateur du point de vente un achat d'unités d'énergie. L'utilisateur indique des données identifiant le véhicule.

L'opérateur interroge le serveur d'achat distant (étape 202) et transmet au serveur les données identifiant le véhicule.

Lorsque le serveur reçoit la requête, il vérifie que l'utilisateur est habilité à acheter la quantité d'énergie demandée. Le serveur d'achat détermine un code attribué à la transaction en fonction des données identifiant le véhicule (étape 203).

Le serveur renvoie à l'opérateur un signal de réponse contenant le code attribué à la transaction (étape 204).

L'opérateur édite une carte prépayée sur laquelle figure le code (étape 205).

Muni de la carte prépayée et du terminal utilisateur, l'utilisateur peut réapprovisionner la réserve d'unités d'énergie.

A cet effet, l'utilisateur commande l'activation de l'application de charge présente dans le terminal utilisateur (étape 205) et saisit le code inscrit sur la carte.

Le terminal utilisateur transmet au module embarqué un signal de recharge d'unités contenant le code (étape 206).

Le module embarqué traite le signal de recharge pour extraire le code (étape 207).

Le module embarqué vérifie que le code est valide en fonction des données identifiant le véhicule (étape 208).

Si le code est valide, le module embarqué crédite alors la réserve d'unités de la quantité d'unités achetée (étape 209).

Dans une variante de ce premier mode, le point de vente peut être équipé d'une borne d'achat, la borne d'achat comprenant des moyens de communication courte distance de type NFC (Near Field Communication) pour échanger des informations avec le terminal utilisateur. Dans cette variante, l'ensemble des étapes est réalisé de manière automatique par dialogue entre la borne d'achat et le terminal utilisateur, sans nécessiter l'intervention d'un opérateur. La borne d'achat interroge le serveur distant, reçoit un signal de réponse de la part du serveur et transmet au terminal utilisateur le code.

### Deuxième mode

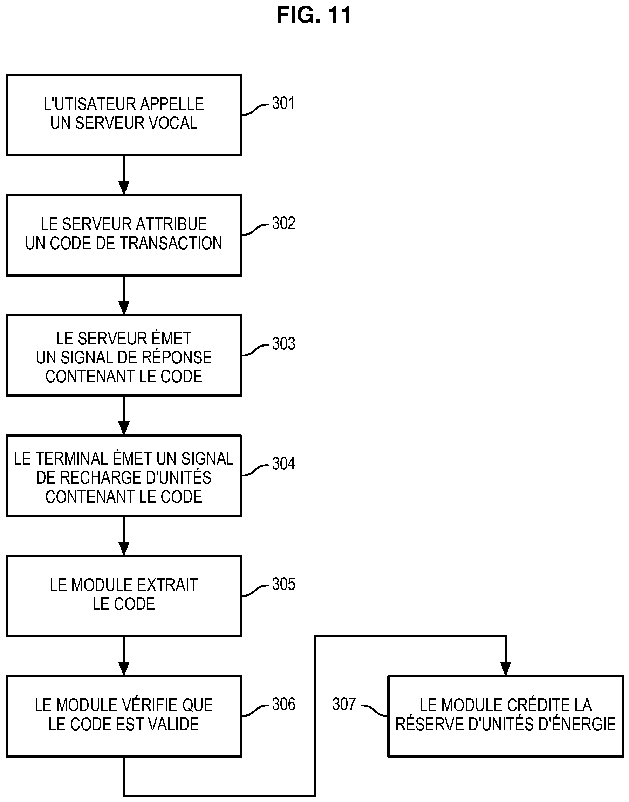

Le deuxième mode est illustré sur la figure 11.

L'utilisateur utilise le terminal utilisateur pour appeler un serveur d'achat (étape 301), qui peut être un serveur vocal, et indique au serveur des données identifiant le véhicule.

Le serveur d'achat vérifie que l'utilisateur est habilité à acheter la quantité d'énergie. Le serveur d'achat détermine un code attribué à la transaction en fonction des données identifiant le véhicule (étape 302).

Le serveur d'achat renvoie à l'opérateur un signal de réponse contenant le code attribué à la transaction (étape 303). En parallèle, le serveur d'achat débite un compte associé au véhicule d'un montant correspondant au prix de la quantité d'unités d'énergie achetée.

Le terminal utilisateur transmet au module embarqué un signal de recharge d'unités contenant le code (étape 304).

Le module embarqué traite le signal de recharge pour extraire le code (étape 305).

Le module embarqué vérifie que le code est valide en fonction des données identifiant le véhicule (étape 305).

Si le code est valide, le module embarqué crédite alors la réserve d'unités de la quantité d'unités achetée (étape 306).

### Troisième mode

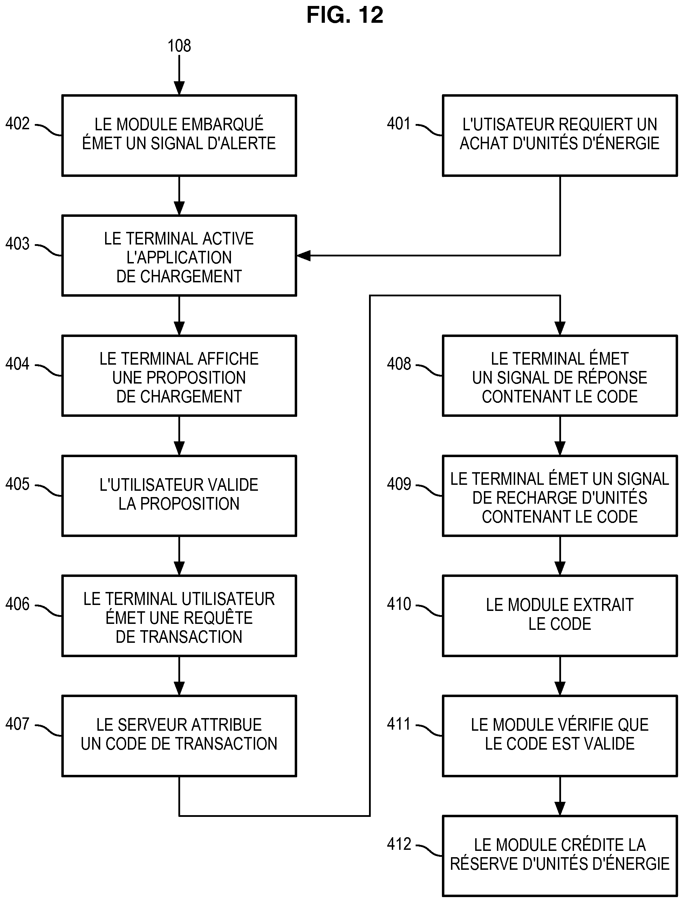

Le troisième mode est illustré sur la figure 12.

Selon ce troisième mode, l'utilisateur peut demander spontanément un réapprovisionnement de la réserve d'unités (étape 401). Dans ce cas, l'utilisateur commande lui-même l'activation de l'application de charge présente dans le terminal utilisateur (étape 403).

Le processus réapprovisionnement peut également être déclenché de manière automatique par le terminal utilisateur. Le réapprovisionnement est déclenché lorsque le module embarqué détecte que la valeur de réserve d'unités d'énergie est insuffisante.

Le module émet un signal d'alerte lorsque la réserve d'unités devient inférieure à un seuil prédéterminé (étape 402). Ce seuil peut par exemple correspondre à une quantité d'unités nécessaire pour une charge complète de la batterie.

Si le terminal utilisateur est à l'état actif, le téléphone reçoit le signal d'alerte et active l'application de charge (étape 403).

Si le terminal utilisateur est à l'état inactif, le module embarqué répète le signal d'alerte (étape 402) jusqu'à activation du terminal utilisateur.

Lorsqu'il reçoit le signal d'alerte, l'application de charge présente dans le terminal utilisateur commande l'affichage sur l'écran du terminal d'un message du type « Souhaitez-vous augmenter votre réserve d'unités d'énergie ? »

L'utilisateur peut accepter la proposition ou refuser la proposition.

Si l'utilisateur accepte la proposition (étape 405), le terminal invite l'utilisateur à indiquer une quantité d'unités d'énergie qu'il souhaite acheter. L'utilisateur peut saisir une quantité d'énergie et valider sa demande à l'aide du clavier.

Lorsque l'utilisateur a validé sa demande, le terminal transmet un signal de requête de transaction au serveur d'achat distant (étape 406). Le signal de requête de transaction, la requête incluant des données identifiant le véhicule et une valeur incrémentale. La valeur incrémentale est une suite de caractère qui est incrémentée par le module embarqué à chaque requête de transaction.

Lorsque le serveur reçoit la requête, il vérifie que l'utilisateur est habilité à acheter la quantité d'énergie. Le serveur d'achat détermine un code attribué à la transaction en fonction des données identifiant le véhicule et de la valeur incrémentale (étape 407). En parallèle, le serveur d'achat débite un compte associé au véhicule d'un montant correspondant au prix de la quantité d'unités d'énergie achetée.

Le serveur renvoie au terminal utilisateur un signal de réponse contenant le code attribué à la transaction (étape 408).

Lorsque le terminal utilisateur reçoit le signal de réponse émis par le serveur, le terminal utilisateur transmet au module embarqué un signal de recharge d'unités contenant le code (étape 409).

Le module embarqué traite le signal de recharge pour extraire le code (étape 410).

Le module embarqué vérifie que le code est valide en fonction des données identifiant le véhicule et de la valeur incrémentale (étape 411).

Si le code est valide, le module embarqué crédite alors la réserve d'unités de la quantité d'unités achetée (étape 412).

Dans un tel procédé, le terminal utilisateur (téléphone mobile, PDA, etc) constitue un intermédiaire entre le module embarqué et le centre d'achat distant.

De plus, les fonctions d'interface utilisateur et de réserve d'unités sont assurées par des équipements distincts.

Un tel procédé présente les avantages suivants :
Le terminal utilisateur assure une fonction d'interface avec l'utilisateur, notamment pour visualiser des informations de chargement ainsi que pour saisir des commandes. Le procédé tire partie des fonctionnalités déjà présentes dans la plupart des terminaux utilisateurs (écran, clavier, moyens de traitement). Ainsi, il n'est pas nécessaire que le module embarqué soit muni de tels moyens. Cela permet de concevoir un module économique et robuste, résistant au vandalisme.

En outre, la mise en œuvre du procédé nécessite une interaction entre le terminal utilisateur et le module embarqué d'une part, et entre le terminal utilisateur et le serveur d'achat d'autre part, notamment par l'intermédiaire d'un code attribué à la transaction, ce qui permet de sécuriser le paiement. En effet, en cas de vol du véhicule ou du terminal utilisateur, un achat d'unités n'est plus possible.

On notera que le système qui vient d'être décrit peut également être utilisé pour la fourniture de services liés au véhicule, tels qu'un service de réservation ou de paiement de place de parking. Dans ce cas, le module embarqué communique avec la borne ou le terminal utilisateur pour requérir un service lié à l'équipement mobile. Le service est payé grâce à la réserve d'unités d'énergie contenue dans le module embarqué. Le module embarqué diminue la valeur de réserve d'unités d'énergie d'une quantité d'unités correspondant au service demandé.

## Revendications

1. Procédé d'alimentation en énergie électrique d'un véhicule, dans lequel le véhicule comprend un module embarqué contenant une valeur de réserve d'unités d'énergie électrique, comprenant des étapes selon lesquelles :
- (206, 303, 408) un terminal utilisateur reçoit un signal contenant un code attribué à une transaction par un serveur d'achat distant, le code ayant été déterminé par le serveur d'achat distant en fonction de données identifiant le véhicule, la transaction correspondant à un achat d'une quantité d'unités d'énergie électrique donnée,
- (207, 304, 409) le terminal utilisateur transmet au module embarqué un signal de recharge d'unités contenant le code pour que le module embarqué augmente la valeur de réserve d'unités d'énergie électrique de la quantité d'unités achetée après que ledit module embarqué a vérifié que le code est valide en fonction des données identifiant le véhicule, et
- lorsque le véhicule est raccordé à une borne de chargement :
◆ la borne de chargement déclenche le chargement d'une batterie du véhicule, et
◆ le module embarqué diminue la valeur de réserve d'unités d'énergie électrique du nombre d'unités d'énergie électrique correspondant à la quantité d'énergie électrique absorbée par la batterie du véhicule
dans lequel le chargement de la batterie prend fin lorsque la réserve d'unités d'énergie électrique est épuisée.

2. Procédé selon la revendication 1, comprenant des étapes selon lesquelles :
- (208, 305, 410) le module embarqué extrait le code du signal de recharge, et
- (209, 306, 411) le module embarqué vérifie que le code correspond à un code attendu.

3. Procédé selon l'une des revendications 1 ou 2, comprenant des étapes préalables selon lesquelles :
- (302, 406) le terminal utilisateur transmet au serveur d'achat distant une requête de transaction, la requête incluant les données identifiant le véhicule,
- (303, 407) le serveur d'achat détermine le code attribué à la transaction en fonction des données identifiant le véhicule.

4. Procédé selon la revendication 3, dans lequel la requête de transaction inclut également une quantité d'unités d'énergie électrique souhaitée, comprenant une étape selon laquelle :
- (303, 407) le serveur d'achat débite un compte associé au véhicule d'un montant correspondant au prix de la quantité d'unités d'énergie électrique achetée.

5. Procédé selon l'une des revendications 3 ou 4, dans lequel (406) le module embarqué transmet également au terminal utilisateur une valeur, la valeur étant incrémentée à chaque transmission, et (407) le serveur d'achat détermine un code attribué à la transaction en fonction de la valeur.

6. Procédé selon l'une des revendications précédentes, comprenant une étape selon laquelle :
- lorsque le module embarqué détecte que la valeur de réserve d'unités d'énergie électrique est inférieure à un seuil prédéfini, (402) le module transmet au terminal utilisateur un signal d'alerte.

7. Procédé selon l'une des revendications qui précèdent, comprenant des étapes selon lesquelles :
- lorsque le terminal utilisateur reçoit un signal d'alerte émis par le module embarqué, (404) le terminal utilisateur avertit un utilisateur que la valeur de réserve d'unités d'énergie électrique est insuffisante et propose un rechargement de la réserve,
- si l'utilisateur valide la proposition, (406) le terminal déclenche un processus de transaction pour augmenter la valeur de réserve d'unités de la quantité d'unités d'énergie électrique achetée.

8. Procédé selon l'une des revendications qui précèdent, comprenant des étapes selon lesquelles :
- le module embarqué communique avec une borne ou le terminal utilisateur pour requérir un service lié à le véhicule, tel qu'un service de réservation ou de paiement de place de parking,
- le module embarqué diminue la valeur de réserve d'unités d'énergie électrique d'une quantité d'unités correspondant au service.

9. Application pour la mise en oeuvre d'un procédé d'alimentation en énergie électrique d'un véhicule selon l'une des revendications qui précèdent, l'application étant téléchargeable dans un terminal utilisateur, et étant apte à exécuter les étapes selon lesquelles :
- (206, 303, 408) le terminal utilisateur reçoit un signal contenant un code attribué à une transaction par un serveur d'achat distant en fonction de données identifiant le véhicule, la transaction correspondant à un achat d'une quantité d'unités d'énergie électrique donnée,
- (207, 304, 409) le terminal utilisateur transmet à un module embarqué dans le véhicule un signal de recharge d'unités contenant le code pour que le module embarqué augmente une valeur de réserve d'unités de la quantité d'unités d'énergie électrique achetée après vérification du code en fonction des données identifiant le véhicule.

10. Module embarqué dans un véhicule, contenant une valeur de réserve d'unités d'énergie électrique, le module étant programmé pour :
- (207, 304, 409) recevoir un signal de recharge d'unités émis par un terminal utilisateur, le signal de recharge contenant un code attribué à une transaction par un serveur d'achat distant en fonction de données identifiant le véhicule, la transaction correspondant à un achat d'une quantité d'unités d'énergie électrique donnée,
- (209, 306, 411) vérifier que le code correspond à un code attendu en fonction des données identifiant le véhicule,
- (210, 307, 412) augmenter la valeur de réserve d'unités de la quantité d'unités d'énergie électrique achetée, et
- lorsque le véhicule est raccordé à une borne de chargement et que la borne de chargement a déclenché le chargement d'une batterie du véhicule : diminuer la valeur de réserve d'unités d'énergie électrique du nombre d'unités d'énergie électrique correspondant à la quantité d'énergie électrique absorbée par la batterie du véhicule.

## Patentansprüche

1. Verfahren zur Versorgung eines Fahrzeugs mit elektrischer Energie, wobei das Fahrzeug ein On-Board-Modul umfasst, das einen Reservewert an Elektroenergieeinheiten enthält, umfassend Schritte, gemäß denen:
- (206, 303, 408) ein Benutzerendgerät ein Signal empfängt, das einen einer Transaktion von einem Ferneinkaufsserver zugewiesenen Code enthält, wobei der Code von dem Ferneinkaufsserver in Abhängigkeit von Daten bestimmt wurde, die das Fahrzeug identifizieren, wobei die Transaktion einem Kauf einer bestimmten Menge an Elektroenergieeinheiten entspricht,
- (207, 304, 409) das Benutzerendgerät dem On-Board-Modul ein Signal zum Laden von Einheiten übermittelt, das den Code enthält, damit das On-Board-Modul den Reservewert an Elektroenergieeinheiten um die gekaufte Menge an Einheiten erhöht, nach Überprüfung durch das On-Board-Modul, dass der Code in Abhängigkeit von den Daten, die das Fahrzeug identifizieren, gültig ist, und
- wenn das Fahrzeug an eine Ladesäule angeschlossen ist:
• die Ladesäule das Laden einer Fahrzeugbatterie auslöst, und
• das On-Board-Modul den Reservewert an Elektroenergieeinheiten um die Anzahl an Elektroenergieeinheiten verringert, die der von der Batterie des Fahrzeugs aufgenommenen Menge an Elektroenergie entspricht,
wobei das Laden der Batterie beendet wird, wenn die Reserve an Elektroenergieeinheiten aufgebraucht ist.

2. Verfahren nach Anspruch 1, umfassend Schritte, gemäß denen:
- (208, 305, 410) das On-Board-Modul den Code aus dem Ladesignal extrahiert, und
- (209, 306, 411) das On-Board-Modul überprüft, dass der Code einem erwarteten Code entspricht.

3. Verfahren nach einem der Ansprüche 1 oder 2, umfassend die vorherigen Schritte, gemäß denen:
- (302, 406) das Benutzerendgerät dem Ferneinkaufsserver eine Transaktionsanfrage übermittelt, wobei die Anfrage die Daten enthält, die das Fahrzeug identifizieren,
- (303, 407) der Einkaufsserver den Code bestimmt, welcher der Transaktion in Abhängigkeit von den Daten zugewiesen wird, die das Fahrzeug identifizieren.

4. Verfahren nach Anspruch 3, wobei die Transaktionsanfrage ebenfalls eine gewünschte Menge an Elektroenergieeinheiten einschließt, umfassend einen Schritt, gemäß dem:
- (303, 407) der Einkaufsserver ein dem Fahrzeug zugeordnetes Konto mit einem Betrag belastet, der dem Preis für die gekaufte Menge an Elektroenergieeinheiten entspricht.

5. Verfahren nach einem der Ansprüche 3 oder 4, wobei (406) das On-Board-Modul dem Benutzerendgerät ebenfalls einen Wert übermittelt, wobei der Wert bei jeder Übermittlung inkrementiert wird, und (407) der Einkaufsserver einen Code bestimmt, welcher der Transaktion in Abhängigkeit von dem Wert zugewiesen wird.

6. Verfahren nach einem der vorangehenden Ansprüche, umfassend einen Schritt, gemäß dem:
- wenn das On-Board-Modul ermittelt, dass der Reservewert an Elektroenergieeinheiten unter einem vorher festgelegten Grenzwert liegt, (402) das Modul an das Benutzerendgerät ein Warnsignal übermittelt.

7. Verfahren nach einem der vorangehenden Ansprüche, umfassend die Schritte, gemäß denen:
- wenn das Benutzerendgerät ein vom On-Board-Modul gesendetes Warnsignal empfängt, (404) das Benutzerendgerät einen Benutzer warnt, dass der Reservewert an Elektroenergieeinheiten unzureichend ist und ein Aufladen der Reserve vorschlägt,
- wenn der Benutzer den Vorschlag annimmt, (406) das Endgerät einen Transaktionsprozess auslöst, um den Reservewert an Einheiten um die gekaufte Menge an Elektroenergieeinheiten zu erhöhen.

8. Verfahren nach einem der vorangehenden Ansprüche, umfassend Schritte, gemäß denen:
- das On-Board-Modul mit einer Säule oder dem Benutzerendgerät kommuniziert, um einen mit dem Fahrzeug verbundenen Service wie einen Parkplatzreservierungs- oder -bezahlservice anzufordern,
- das On-Board-Modul den Reservewert an Elektroenergieeinheiten um eine Menge an Einheiten verringert, die dem Service entspricht.

9. Anwendung für die Umsetzung eines Verfahrens zur Versorgung eines Fahrzeugs mit elektrischer Energie nach einem der vorangehenden Ansprüche, wobei die Anwendung auf ein Benutzerendgerät herunterladbar und imstande ist, die Schritte auszuführen, gemäß denen:
- (206, 303, 408) das Benutzerendgerät ein Signal empfängt, das einen einer Transaktion von einem Ferneinkaufsserver in Abhängigkeit von Daten, die das Fahrzeug identifizieren, zugewiesenen Code enthält, wobei die Transaktion einem Kauf einer bestimmten Menge an Elektroenergieeinheiten entspricht,
- (207, 304, 409) das Benutzerendgerät einem On-Board-Modul des Fahrzeugs ein Signal zum Laden von Einheiten übermittelt, das den Code enthält, damit das On-Board-Modul einen Reservewert an Einheiten nach Überprüfung des Codes in Abhängigkeit von den Daten, die das Fahrzeug identifizieren, um die gekaufte Menge an Elektroenergieeinheiten erhöht.

10. On-Board-Modul eines Fahrzeugs, enthaltend einen Reservewert an Elektroenergieeinheiten, wobei das Modul programmiert ist, um:
- (207, 304, 409) ein von einem Benutzerendgerät gesendetes Signal zum Laden von Einheiten zu empfangen, wobei das Ladesignal einen Code enthält, der einer Transaktion von einem Ferneinkaufsserver in Abhängigkeit von Daten, die das Fahrzeug identifizieren, zugewiesen wurde, wobei die Transaktion einem Kauf einer bestimmten Menge an Elektroenergieeinheiten entspricht,
- (209, 306, 411) zu überprüfen, dass der Code in Abhängigkeit von den Daten, die das Fahrzeug identifizieren, einem erwarteten Code entspricht,
- (210, 307, 412) den Reservewert an Einheiten um die gekaufte Menge an Elektroenergieeinheiten zu erhöhen, und
- wenn das Fahrzeug an eine Ladesäule angeschlossen ist und die Ladesäule das Laden einer Batterie des Fahrzeugs ausgelöst hat: Verringern des Reservewertes an Elektroenergieeinheiten um die Anzahl an Elektroenergieeinheiten, die der von der Batterie des Fahrzeugs aufgenommenen Menge an Elektroenergie entspricht.

## Claims

1. A method for supplying a vehicle with electrical energy, wherein the vehicle comprises an on-board module containing a value of a reserve of electrical energy units, comprising steps according to which:
- (206, 303, 408) a user terminal receives a signal containing a code assigned to a transaction by a remote purchase server, the code having been determined by the remote purchase server based on data identifying the vehicle, the transaction corresponding to a purchase of a given amount of electrical energy units,
- (207, 304, 409) the user terminal transmits to the on-board module a unit recharge signal containing the code so that the on-board module increases the value of the reserve of electrical energy units by the amount of units purchased after said on-board module has verified that the code is valid based on the data identifying the vehicle, and
- when the vehicle is connected to a charging station:
• the charging station triggers the charging of a battery of the vehicle, and
• the on-board module decreases the value of the reserve of electrical energy units by the number of electrical energy units corresponding to the amount of electrical energy absorbed by the battery of the vehicle,
wherein the charging of the battery ends when the reserve of electrical energy units is depleted.

2. The method according to claim 1, comprising steps according to which:
- (208, 305, 410) the on-board module extracts the code from the recharge signal, and
- (209, 306, 411) the on-board module verifies that the code corresponds to an expected code.

3. The method according to any of claims 1 or 2, comprising prior steps according to which:
- (302, 406) the user terminal transmits to the remote purchase server a transaction request, the request including the data identifying the vehicle,
- (303, 407) the purchase server determines the code assigned to the transaction based on the data identifying the vehicle.

4. The method according to claim 3, wherein the transaction request also includes a desired amount of electrical energy units, comprising a step according to which:
- (303, 407) the purchase server debits an account associated with the vehicle by an amount corresponding to the price of the purchased amount of electrical energy units.

5. The method according to any of claims 3 or 4, wherein (406) the on-board module also transmits to the user terminal a value, the value being incremented at each transmission, and (407) the purchase server determines a code assigned to the transaction based on the value.

6. The method according to any of the preceding claims, comprising a step according to which:
- when the on-board module detects that the value of the reserve of electrical energy units is less than a predefined threshold, (402) the module transmits to the user terminal an alert signal.

7. The method according to any of the preceding claims, comprising steps according to which:
- when the user terminal receives an alert signal emitted by the on-board module, (404) the user terminal warns a user that the value of the reserve of electrical energy units is insufficient and proposes a recharging of the reserve,
- if the user validates the proposal, (406) the terminal triggers a transaction process to increase the value of the reserve of units by the purchased amount of electrical energy units.

8. The method according to any of the preceding claims, comprising steps according to which:
- the on-board module communicates with a station or the user terminal to require a service related to the vehicle, such as a service of reservation or payment of a parking spot,
- the on-board module decreases the value of the reserve of electrical energy units by an amount of units corresponding to the service.

9. An application for the implementation of a method for supplying a vehicle with electrical energy according to any of the preceding claims, the application being downloadable in a user terminal, and being able to perform the steps according to which:
- (206, 303, 408) the user terminal receives a signal containing a code assigned to a transaction by a remote purchase server based on data identifying the vehicle, the transaction corresponding to a purchase of a given amount of electrical energy units,
- (207, 304, 409) the user terminal transmits to a module on-board the vehicle a unit recharge signal containing the code for the on-board module to increase a value of the reserve of units by the amount of electrical energy units purchased after verification of the code based on the data identifying the vehicle.

10. A module on-board a vehicle, containing a value of a reserve of electrical energy units, the module being programmed to:
- (207, 304, 409) receive a unit recharge signal emitted by a user terminal, the recharge signal containing a code assigned to a transaction by a remote purchase server based on data identifying the vehicle, the transaction corresponding to a purchase of a given amount of electrical energy units,
- (209, 306, 411) verify that the code corresponds to an expected code based on the data identifying the vehicle,
- (210, 307, 412) increase the value of the reserve of units by the purchased amount of electrical energy units, and
- when the vehicle is connected to a charging station and when the charging station has triggered the charging of a battery of the vehicle: decrease the value of the reserve of electrical energy units by the number of electrical energy units corresponding to the amount of electrical energy absorbed by the battery of the vehicle.
